(19) Europäisches Patentamt
European Patent Office
Office européen des brevets

(11) Numéro de publication: **0 342 066**
**A1**

# (12) DEMANDE DE BREVET EUROPEEN

(21) Numéro de dépôt: **89400658.4**

(22) Date de dépôt: **09.03.89**

(51) Int. Cl.4: **C 08 G 81/02**
C 08 L 77/00, C 08 L 23/12,
C 08 L 25/18, C 08 L 31/04

(30) Priorité: **24.03.88 FR 8803877**

(43) Date de publication de la demande:
**15.11.89 Bulletin 89/46**

(84) Etats contractants désignés:
**AT BE CH DE ES FR GB GR IT LI LU NL SE**

(71) Demandeur: **ATOCHEM**
**4 & 8, Cours Michelet La Défense 10**
**F-92800 Puteaux (FR)**

(72) Inventeur: **Glotin, Michel**
**Domaine de Maubuisson**
**F-27470 Serquigny (FR)**

**Parsy, Roland Résidence Hélène Boucher R19**
**25, rue Hélène Boucher**
**F-76600 Le Havre (FR)**

**Abadie, Patrick**
**38, Les Logis Allée Fernand Leger**
**F-27300 Bernay (FR)**

(54) **Copolymère greffé à base d'alpha-mono-oléfine, son procédé de fabrication, son application à la fabrication d'alliages thermoplastiques, alliages thermoplastiques obtenus.**

(57) La demande concerne un copolymère greffé constitué d'au moins un oligomère monoaminé de polyamide et d'un polymère ou copolymère d'α-mono-oléfine greffé par un monomère pouvant réagir avec la fonction amine de l'oligomère. Il est préparé par greffage radicalaire du monomère sur le copolymère puis par addition de l'oligomère.

La demande concerne également l'utilisation de ce copolymère greffé notamment comme agent de compatibilité d'au moins deux polymères thermoplastiques incompatibles entre eux pour la fabrication d'alliages.

EP 0 342 066 A1

**Description**

## COPOLYMERE GREFFE A BASE D'α-MONO-OLEFINE, SON PROCEDE DE FABRICATION, SON APPLICATION A LA FABRICATION D'ALLIAGES THERMOPLASTIQUES, ALLIAGES THERMOPLASTIQUES OBTENUS

La présente invention concerne un copolymère greffé à base d'α-mono-oléfine, son procédé de fabrication et son utilisation notamment en tant qu'agent permettant de rendre compatibles au moins deux polymères thermoplastiques incompatibles.

Il est connu de rendre compatibles, dans certains mélanges spécifiques, deux polymères incompatibles en leur associant un tiers polymère, partiellement compatible avec l'un et l'autre des polymères.

C'est ainsi, par exemple, que pour le mélange polypropylène-polyamide, différents tiers polymères ont été proposés :

Dans le brevet japonais de MITSUBISHI RAYON publié sous le numéro 70-030943, on a décrit une composition comprenant du polypropylène, du polyamide et du polypropylène greffé par de l'anhydride maléique.

Dans le brevet japonais de MITSUI publié sous le N° 59-149940, on a revendiqué une composition contenant du polypropylène, du polyamide et un copolymère éthylène-propylène greffé par de l'anhydride maléique.

Dans le brevet français de MITSUBISHI RAYON publié sous le numéro FR 2.107.538, on a décrit une composition de polypropylène et de polyamide renforcée fibres de verre, qui a été compatibilisée par addition d'un copolymère de propylène et d'α-oléfine greffé par des chaînes polyamides. Ce copolymère greffé est obtenu par polycondensation d'un amino-acide en présence de copolymère de propylène préalablement greffé par de l'anhydride maléique.

Dans le brevet japonais de TOA GOSEI et MITSUI TOATSU publié sous le n° 60-233131, on a décrit la préparation d'un copolymère greffé pour compatibiliser un mélange de polypropylène et de polychlorure de vinyle. Ce copolymère greffé est obtenu par réaction d'un polypropylène modifié par 2 à 20 % en poids d'anhydride maléique avec un polyméthylméthacrylate ayant un groupement terminal hydroxy.

L'invention a pour objet en premier lieu de nouveaux copolymères greffés constitués d'au moins un oligomère monoaminé de polyamide et d'un polymère (au copolymère) d'α-mono-oléfine greffé avec un monomère pouvant réagir avec une fonction amine de l'oligomère monoaminé de polyamide.

L'invention concerne également le procédé de fabrication de ce copolymère greffé. Il est préparé par greffage radicalaire sur une chaîne de polymère contenant des motifs dérivés d'α-mono-oléfine, d'un monomère capable de réagir avec une fonction amine puis par addition de l'oligomère monoaminé de polyamide sur le copolymère greffé.

L'invention a également pour objet l'application de ce copolymère greffé pour l'associer à au moins deux polymères thermoplastiques incompatibles entre eux mais dont au moins un est compatible avec l'oligomère de polyamide et au moins un est compatible avec le polymère ou copolymère d'α-mono-oléfine.

Le copolymère selon l'invention est constitué par un copolymère greffé représenté par l'expression $A_aM_bX_cP_d$ dans laquelle :

. $A_aM_b$ correspond au (co)polymère-tronc,

. $X_cP_d$ correspond aux polymères greffés sur le (co)polymère-tronc,

. A est un motif dérivé d'une α-mono-oléfine contenant de 2 à 8 atomes de carbone, et est de préférence un motif dérivé de propylène,

. M est choisi dans le groupe constitué par :

- les motifs dérivés d'une α-mono-oléfine contenant de 2 à 8 atomes de carbone, et de préférence dérivés d'éthylène,
- les motifs dérivés de plusieurs α-mono-oléfines telles que définies précédemment, qui peuvent être simplement mélangés ensemble ou être copolymérisés de façon statistique ou séquencée, et de préférence dont l'une des α-mono-oléfines est l'éthylène,
- les motifs dérivés d'un monomère pouvant être polymérisés avec une des α-mono-oléfines telles que définies précédemment, par exemple un acrylate d'alkyle,

. Les motifs A et M qui constituent ledit (co)polymère-tronc sont copolymérisés de façon statistique ou séquencée ou sont simplement mélangés,

. X est un motif dérivé d'un monomère pouvant être greffé radicalairement sur un homo ou copolymère d'α-mono-oléfine et possédant une fonction pouvant réagir avec un motif amine,

. P dérive d'un oligomère de polyamide de formule :

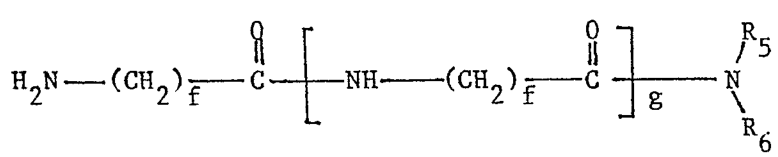

dans laquelle :

. f est un nombre compris entre 3 et 11,

. g est un nombre compris entre 5 et 80 et de préférence compris entre 15 et 55,
. $R_5$ est l'hydrogène ou un groupement alkyle linéaire ou ramifié contenant jusqu'à 20 atomes de carbone,
. $R_6$ est un groupement ayant jusqu'à 20 atomes de carbone alkyle ou alcényle linéaire ou ramifié, un radical cycloaliphatique, saturé ou non, un radical aromatique ou une combinaison des précédents,
. a, b, c et d sont des nombres répondant aux définitions suivantes :
. a est compris entre 0 et 5000 et de préférence entre 350 et 2000,
. la somme a + b est comprise entre 350 et 45.000 et de préférence entre 500 et 10 000,
. c est choisi de telle sorte que le rapport pondéral du monomère X greffé sur le (co)polymère-tronc au copolymère greffé avec X soit compris entre 500 ppm et 10 %, de préférence inférieur à 2 %, et mieux compris entre 5000 ppm et 1,5 %,
. d est non nul et inférieur ou égal à c, et de préférence, au moins égal à 0,3 c.

Par (co)polymère-tronc de formule :
$A_a M_b$
dans laquelle a,b, A et M sont tels que définis précédemment, on entend tout copolymère composé de motifs A et B, dérivés de monomères polymérisés de façon statistique ou séquencée, ou éventuellement tout mélange de polymères obtenus par polymérisations séparées de monomères dont dérivent les motifs A et M.

Cette copolymérisation ou ce mélange peuvent s'effectuer selon les procédés connus.

A titre d'exemple, on peut citer la copolymérisation de propylène et d'α-oléfine en présence de catalyseur ZIEGLER ou de coordination.

Le copolymère greffé selon l'invention peut être obtenu par greffage radicalaire sur le (co)polymère-tronc d'un monomère pouvant réagir avec une fonction amine puis par addition de l'oligomère sur le (co)polymère préalablement greffé.

Le monomère X que l'on greffe radicalairement sur le (co)polymère-tronc et qui possède une fonction pouvant réagir avec une fonction amine peut répondre notamment à l'une des formules suivantes :

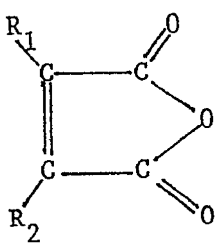 , 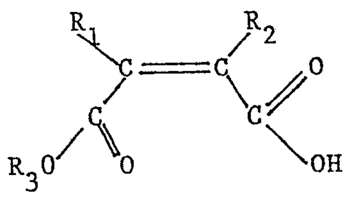 , 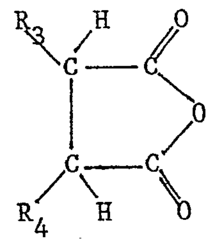

dans lesquelles :
. $R_1$ et $R_2$ sont soit l'hydrogène, soit une chaîne alkyle linéaire ou ramifiée contenant jusqu'à 8 atomes de carbone,l'un au moins de ces symboles représentant l'hydrogène,
. $R_3$ est l'hydrogène ou un groupement alkyle linéaire ou ramifié contenant jusqu'à 10 atomes de carbone,
. $R_4$ est un groupement alcényle linéaire ou ramifié contenant jusqu'à 12 atomes de carbone.

Les monomères X préférés sont l'anhydride citraconique, l'acide fumarique, l'acide mésaconique, l'anhydride d'acide 3-allylsuccinique, et tout particulièrement, l'anhydride maléique.

Le greffage du monomère X sur le (co)polymère-tronc effectué selon un mécanisme radicalaire, a lieu en présence d'un amorceur radicalaire qui peut être le peroxyde de dicumyle, le peroxyde de benzoyle, le diméthyl -2,5, di(tertiobutylperoxy)-2,5 hexane.

Habituellement on utilise l'amorceur à un taux de $2{,}5 \cdot 10^{-4}$ à $4 \cdot 10^{-2}$ par rapport au poids du (co)polymère.

Le greffage radicalaire du monomère X sur le (co)polymère-tronc peut s'effectuer à l'état fondu ou en solution dans un solvant du (co)polymère-tronc. A titre d'exemple de tels solvants, on peut citer le toluène, le xylène, le chlorobenzène.

La technique du greffage en solution est particulièrement recommandée lorsqu'on désire obtenir un taux de greffage supérieur à 1,5 % (rapport pondéral du monomère X greffé sur le (co)polymère-tronc greffé avec X).

On introduit le (co)polymère-tronc, le monomère X et l'amorceur de polymérisation radicalaire dans un solvant du (co)polymère. On porte l'ensemble à une température telle que la décomposition thermique de l'amorceur radicalaire ait lieu pour que s'effectue la réaction de greffage. D'une manière générale, la durée de cette réaction est comprise entre 0,5 et 10 fois, et de préférence entre 1 et 4 fois la durée de demi-vie de l'amorceur radicalaire à la température de réaction.

En général la température de décomposition thermique de l'amorceur radicalaire est comprise entre 90 et 200 °C, et de préférence 110 et 140 °C.

La technique de greffage radicalaire à l'état fondu du monomère X sur le (co)polymère-tronc est particulièrement bien adaptée lorsque l'on désire obtenir un taux de greffage compris entre 500 ppm et 1,5 %.

Le greffage radicalaire à l'état fondu consiste à mélanger le (co)polymère-tronc avec les quantités choisies de monomère X et d'amorceur radicalaire par exemple dans une extrudeuse. On porte le mélange à une température comprise, en général entre 170 et 250°C, et de préférence entre 180 et 200°C.

Le temps de séjour moyen de la matière fondue dans l'extrudeuse est choisi habituellement entre 15 secondes et 3 minutes, et de préférence entre 40 et 80 secondes.

On peut mesurer le taux de greffage du monomère X sur le (co)polymère-tronc par dosage des fonctions

anhydrides par spectro-photométrie infra-rouge.

On ajoute ensuite sur le (co)polymère greffé l'oligomère monoaminé de polyamide, P, de formule :

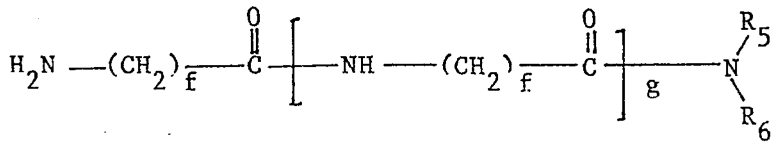

dans laquelle f, g, $R_5$ et $R_6$ sont tels que définis précédemment.

Cet oligomère monoaminé de polyamide peut être obtenu par polycondensation d'un amino-acide de formule :

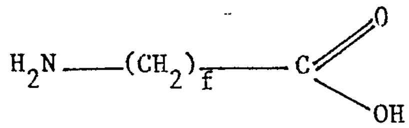

ou par polyaddition d'un lactame de formule :

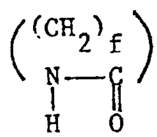

dans lesquelles f a la signification donnée précédemment, en présence d'un limitateur monofonctionnel de polymérisation de formule :

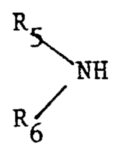

dans laquelle $R_5$ et $R_6$ ont la signification donnée précédemment.

Les monomères amino-acides ou lactames préférés pour la synthèse de l'oligomère monoaminé selon l'invention sont choisis parmi le caprolactame, l'acide amino-11-undécanoïque ou le dodécalactame.

Les limitateurs monofonctionnels de polymérisation préférés sont la laurylamine et l'oléylamine.

La polycondensation définie ci-dessus s'effectue selon les procédés habituellement connus, par exemple à une température comprise en général entre 200 et 300° C, sous vide ou sous atmosphère inerte, avec agitation du mélange réactionnel.

La longueur de chaîne moyenne de l'oligomère est déterminée par le rapport molaire initial entre le monomère polycondensable ou le lactame et le limitateur monofonctionnel de polymérisation.

Pour le calcul de la longueur de chaîne moyenne, on compte habituellement une molécule de limitateur de chaîne pour une chaîne d'oligomère.

L'addition de l'oligomère monoaminé de polyamide sur le (co)polymère-tronc greffé avec un monomère X s'effectue par réaction d'une fonction amine de l'oligomère avec au moins une fonction anhydride ou acide du (co)polymère greffé. On crée ainsi des liaisons amides ou imides.

On réalise l'addition de l'oligomère P sur le (co)polymère-tronc greffé, de préférence à l'état fondu. On peut ainsi, dans une extrudeuse, malaxer l'oligomère et le (co)polymère à une température généralement comprise entre 230 et 250° C. Le temps de séjour moyen de la matière fondue dans l'extrudeuse peut être compris entre 15 secondes et 5 minutes, et de préférence entre 1 et 3 minutes.

L'addition de l'oligomère sur le (co)polymère-tronc greffé est évaluée par extraction sélective des oligomères de polyamide libres c'est-à-dire ceux qui n'ont pas réagi pour former le copolymère greffé final.

Les copolymères d'$\alpha$-mono-oléfine greffés conformes à l'invention présentent les avantages suivants par rapport aux tiers-polymères de la littérature :

- On peut contrôler le taux de greffage de l'oligomère de polyamide sur le (co)polymère greffé et ainsi mieux maîtriser la structure du copolymère greffé.
- On peut ajuster et contrôler la masse moléculaire moyenne de l'oligomère monoaminé de polyamide. En effet, la masse moléculaire moyenne de l'oligomère de polyamide est un facteur déterminant pour l'action et l'efficacité du copolymère greffé selon l'invention comme agent de compatibilité pour des alliages de polymères incompatibles.
- Les copolymères greffés selon l'invention ne présentant aucune extrémité de chaîne réactive au sens de la polycondensation, lors du malaxage des constituants de l'alliage avec le copolymère greffé selon l'invention, lesdites extrémités de chaîne ne réagiront pas de façon incontrôlée.

Le copolymère greffé conforme à l'invention permet notamment de combiner de façon homogène au moins deux polymères thermoplastiques incompatibles entre eux mais dont l'un est compatible avec l'oligomère de polyamide constitutif dudit copolymère et l'autre est compatible avec le (co)polymère-tronc.

Le copolymère greffé peut être incorporé de façon habituelle au mélange de résines thermoplastiques, à l'état fondu, dans un apparil de malaxage. Le quantité de copolymère introduite peut être comprise entre 0,1 à 30 % et de préférence entre 5 à 15 % en poids par rapport au poids de mélange de résines thermoplastiques.

A titre d'exemples de polymères ou résines thermoplastiques compatibles avec les oligomères de polyamide entrant dans la composition du copolymère greffé on peut citer notamment :

- des polyamides aliphatiques tels les polyamides 6, 11 ou 12,
- les polyamides semi-aromatiques et notamment tels que définis dans les brevets français FR 1.588.130, 2.324.672 et 2.575.756, dans le brevet européen EP 53.876, dans les brevets japonais 60.217.237 et 59.015.447.
- des polyéther ester amides séquencés ou polyéther-bloc-amides et notamment les produits décrits dans les brevets américains 4.332.920 et 4.331.786.
- des copolymères éthylène-acétate de vinyle hydrolysés,
- des résines comportant des motifs phénoliques telles que le polyparavinylphénol.

Sous la dénomination polymères, on entend également les copolymères dans la mesure où la teneur en motifs compatibles du copolymère est suffisante pour conserver la compatibilité.

Sous la dénomination polymères, il convient aussi d'entendre le mélange de polymères (ou de copolymères) avec des additifs divers (modifiants choc, charges minérales, fibres de verre, pigments...)

A titre d'exemples de polymères thermoplastiques compatibles avec le (co)polymère-tronc on peut citer notamment le polypropylène, le polyéthylène ou les copolymères éthylène-propylène.

Grâce à l'agent de compatibilité selon l'invention, il est possible de réaliser des alliages améliorés tels que :

| | |
|---|---|
| Polyamide-6 | - polypropylène |
| Polyamide-6 | - polyéthylène |
| Polyamide-6 | - copolymère éthylène/propylène |
| Polyamide-11 ou 12 | - polypropylène ou polyéthylène ou copolymère éthylène/propylène |
| Copolymère éthylène - acétate de vinyle hydrolysé | - polypropylène ou polyéthylène ou copolymère éthylène/propylène |
| Polyparavinylphénol | polypropylène ou polyéthylène ou copolymère éthylène/propylène |
| Polyéther bloc amide | polypropylène ou polyéthylène ou copolymère éthylène/propylène |
| Polyamide semi aromatique | polypropylène ou polyéthylène ou copolymère éthylène/propylène |

La compatibilité engendrée par le copolymère greffé selon l'invention est mise en évidence par microscopie électronique et par les propriétés mécaniques du produit résultant du mélange des polymères thermoplastiques incompatibles.

La morphologie d'un mélange de polymères thermoplastiques sans le copolymère greffé selon l'invention, examinée en microscopie électronique, se présente généralement sous forme de gros nodules d'un polymère inclus dans la matrice constituée par l'autre polymère, l'adhésion entre les nodules et la matrice étant quasi inexistant. L'addition du copolymère greffé provoque une diminution significative de la taille des nodules. On observe également une forte adhésion entre les phases visibles par un recouvrement des nodules par la matrice. Il se forme dans ces conditions ce qu'on peut appeler un alliage, par assimilation aux structures métallurgiques, se différenciant des simples mélanges.

Les propriétés mécaniques de tels alliages thermoplastiques sont au moins égales à celles des constituants, pondérées par la fraction volumique de chaque constituant, et dans certains cas supérieures à celles des deux constituants par exemple la résilience.

A la différence de ces alliages conformes à l'invention, de simples mélanges des mêmes polymères incompatibles entre eux, sans intervention du copolymère greffé selon l'invention, possèdent des propriétés mécaniques généralement proches de celles du constituant le moins performant.

Les exemples suivants illustrent l'invention sans toutefois la limiter.

EXEMPLE 1 :

A. - Synthèse du copolymère-tronc greffé X

Dans une extrudeuse WERNER, on introduit en continu un mélange en poids comportant 100 parties de copolymère séquencé de propylène-éthylène (contenant 12 % en poids d'éthylène, de melt index = 5, de point de fusion = 163° C), 1,6 parties d'anhydride maléique et 1,7 parties de diméthyl -2,5 di(tertiobutylperoxy)-2,5 hexane dissous dans une partie de chlorobenzène.

L'ensemble est porté à 200° C et la vitesse de rotation de la vis est de 100 tours/minute.

On procède à une dévolatilisation du mélange avant l'entrée de la filière afin d'extraire le chlorobenzène et l'anhydride maléique qui n'a pas réagi.

A la sortie de la filière, on prélève un échantillon du polymère greffé que l'on dissout dans le xylène puis précipite dans l'acétone pour le purifier.

Par dosage des fonctions anhydrides par spectrophotométrie infra-rouge, on détermine 1,16 % en poids d'anhydride greffé.

Par chromatographie de perméation sur gel, on détermine que la masse moléculaire moyenne en nombre est égale à 32 000.

B - Synthèse de l'oligomère de polyamide (P)

Dans un réacteur en inox de 100 litres, on introduit 31 kg de caprolactame, 0,91 kg de laurylamine et 3,5 litres d'eau.

On chauffe le réacteur en position fermée pendant 2 heures à 250° C, après l'avoir purgé à l'azote et sous une agitation de 35 tours/minute. On effectue ensuite une détente de l'atmosphère du réacteur en 1 heure.

Après un balayage à l'azote du réacteur pendant 15 minutes, l'oligomère est coulé dans de l'eau, essoré, lavé avec de l'eau à 80° C puis séché 16 heures dans une étuve à vide à 80 °C.

On obtient ainsi un oligomère de polyamide dont la masse moléculaire moyenne en nombre est de 5700, déterminée par dosage potentiométrique des fonctions amines terminales.

C - Préparation du copolymère greffé

Dans une extrudeuse WERNER ZSK30, on malaxe à l'état fondu un mélange en poids comprenant 59,8 parties du copolymère-tronc greffé décrit sous A et 40,2 parties de l'oligomère décrit sous B.

L'ensemble est porté à 240° C.

Le temps de séjour moyen du mélange dans l'extrudeuse est d'environ 3 minutes.

En sortie d'extrudeuse, on prélève un échantillon de matière que l'on introduit dans un extracteur de type KUMAGAWA.

On extrait ainsi sélectivement par l'acide formique les oligomères de polyamide qui n'ont pas réagi avec les fonctions anhydrides du copolymère maléisé. On détermine par cette méthode un taux de condensation de l'oligomère de polyamide sur le (co)polymère greffé de 65 %.

Le copolymère greffé ainsi obtenu peut être représenté par l'expression :

$A_{663}\ M_{136}\ X_{3,78}\ P_{2,45}$

où A est un motif dérivé du propylène

M est un motif dérivé de l'éthylène

X est un motif dérivé de l'anhydride maléique

P est un oligomère de caprolactame de $\overline{Mn}$ = 5700

EXEMPLE 2 :

Dans une extrudeuse WERNER on introduit en continu un mélange en poids comportant 33 parties de polypropylène, 57 parties de polyamide 6 et 10 parties du copolymère-tronc maléisé décrit dans l'exemple 1.A (ECHANTILLON 1).

Le long du fourreau la température-matière est comprise entre 255 et 270° C. La vitesse de rotation de la vis est de 150 tours/minutes et le débit de la matière est de 20 kg/heure.

On extrude dans les même conditions un mélange en poids contenant 33 parties de polypropylène, 57 parties de polyamide 6 et 10 parties du copolymère greffé décrit dans l'exemple 1.C (ECHANTILLON 2).

On prépare, également dans les mêmes conditions un mélange témoin contenant (en poids) 36,7 parties de polypropylène et 63,3 parties de polyamide 6 (ECHANTILLON 3).

Pour les ECHANTILLONS 1, 2 et 3, le polypropylène utilisé est un homopolymère de propylène de melt index = 3 et de point de fusion = 166 °C, et le polyamide 6 utilisé est un homopolymère de caprolactame de point de fusion = 218 °C.

On injecte les échantillons 1, 2 et 3 sous forme de plaques de dimension 100 X 100 X 3 mm dans lesquelles on découpe des éprouvettes iso 1/2 conformément à la norme NFT 51034.

Des éprouvettes sont découpées dans le sens du flux d'injection (EPROUVETTES A) ; d'autres sont découpées perpendiculairement au sens du flux d'injection (EPROUVETTES B).

On moule également des éprouvettes avec les échantillons conformément à la norme définie par l'Institut Français du Caoutchouc (EPROUVETTES C).

On évalue les éprouvettes A, B et C en traction-allongement conformément à la norme NFT 51034.

Les éprouvettes de l'ECHANTILLON 3 (témoin) sont extrêmement fragiles : elles se cassent dès 5 à 6 % d'allongement ; cela indique une morphologie grossière et inhomogène ainsi qu'un manque d'adhésion entre les deux constituants de l'ECHANTILLON TEMOIN 3.

Les éprouvettes A, B et C de l'ECHANTILLON 1 se comportent différemment : les éprouvettes A et B ont un comportement plus fragile que l'éprouvette C ; ceci correspond à une inhomogénéité de l'échantillon ainsi qu'une sensibilité à l'orientation.

On observe un comportement ductile homogène pour les trois types d'éprouvettes de l'ECHANTILLON 2 : cela indique une bonne homogénéité de l'ECHANTILLON 2 ainsi qu'une faible sensibilité à la transformation et à l'orientation.

On teste également en choc CHARPY à température ambiante les ECHANTILLONS 1 et 2, après les avoir injectés sous forme de barreaux.

Pour l'ECHANTILLON 1, on observe un taux de casse de 60 %.

Pour l'ECHANTILLON 2, aucun barreau testé ne s'est cassé.

EXEMPLE 3 :

A. Dans une extrudeuse WERNER ZSK30, on introduit en continu un mélange en poids contenant 100 parties de copolymère séquencé éthylène-propylène (contenant 12 % en poids d'éthylène, de melt index = 5, de point de fusion = 163°C), 1,5 parties d'anhydride maléique et 1,7 parties de diméthyl -2,5 di(tertiobutylperoxy)-2,5 hexane dissous dans une partie de chlorobenzène.

Les conditions d'extrusion et de purification sont identiques à celles décrites dans l'exemple 1.A.

Le dosage des fonctions anhydrides par spectrophotométrie infra-rouge d'un échantillon de copolymère greffé indique que 1,02 % en poids anhydride a été greffé.

La masse moléculaire moyenne en nombre $\overline{M_n}$ déterminée par chromatographie de perméation sur gel est de 19 700.

B. On prépare un oligomère monoaminé de polyamide dans les mêmes conditions que celles décrites dans l'exemple 1.B. avec un rapport pondéral du caprolactame sur la laurylamine égal à 15,7. La masse moléculaire moyenne en nombre $\overline{M_n}$ de l'oligomère est de 2 800.

C. Dans une extrudeuse WERNER ZSK30, on malaxe à l'état fondu, dans les mêmes conditions que celles décrites dans l'exemple 1.C un mélange en poids comprenant 77 parties de copolymère greffé décrit ci-dessus et 23 parties de l'oligomère de polyamide tel que décrit précédemment.

Après l'extrusion, on mesure le taux de condensation de l'oligomère sur le copolymère-tronc greffé dans les mêmes conditions que celles décrites dans l'exemple 1.C, qui est de 65,8 %.

Le copolymère greffé ainsi obtenu peut être représenté par l'expression :

$A_{409}\ M_{84}\ X_{2,05}\ P_{1,35}$

où A représente un motif dérivé de propylène

M représente un motif dérivé d'éthylène

X représente un motif dérivé d'anhydride maléique et

P représente un motif dérivé d'oligomère de caprolactame de $\overline{Mn}$ = 2800

EXEMPLE 4 :

Un mélange en poids comportant 50 parties de polypropylène et 50 parties de copolymère éthylène-acétate de vinyle hydrolysé (EVOH) est porté à 220° C et malaxé dans la cuve d'un plastographe BRABENDER pendant 30 minutes avec une vitesse d'agitation de 50 tours/minute (ECHANTILLON 4).

Un mélange en poids comportant 49 parties de polypropylène, 49 parties d'EVOH et 2 parties du copolymère-tronc éthylène-propylène maléisé décrit dans le'exemple 3.A, est malaxé dans les mêmes conditions que ci-dessus (ECHANTILLON 5).

On prépare également dans les mêmes conditions un mélange en poids contenant 49 parties de polypropylène, 49 parties d'EVOH et 2 parties du copolymère greffé décrit dans l'exemple 3.C (ECHANTILLON 6).

Pour les ECHANTILLONS 4, 5 et 6, le polypropylène utilisé a un melt index égal à 5 et un point de fusion égal à 166 °C et l'EVOH utilisé est tel que sa teneur en éthylène est de 38 % (en mole).

Les ECHANTILLONS 4, 5 et 6 sont ensuite examinés par microscopie électronique à balayage (grossissement : X 2 500).

L'examen de l'ECHANTILLON 4 montre que les deux polymères sont très peu compatibles : on distingue des nodules très disparates d'EVOH dont le diamètre varie de 11 à 27 µm dans la matrice de polypropylène ; de plus on observe que l'adhésion entre ces nodules d'EVOH et la matrice de polypropylène est très mauvaise.

L'examen de l'ECHANTILLON 5 indique une morphologie assez grossière : on distingue des nodules d'EVOH de diamètre compris entre 5,7 et 7 µm dont l'adhésion avec la matrice de polypropylène est mauvaise.

L'examen de l'ECHANTILLON 6 indique une morphologie fine caractérisée par des nodules de diamètre compris entre 1,7 et 2,8 µm et dont l'adhésion à la matrice de polypropylène est très bonne.

EXEMPLE 5

Un mélange en poids comportant 50 parties de polypropylène et 50 parties de polyparavinylphénol (PPVP) est porté à 200 °C et malaxé dans la cuve d'un plastographe BRABENDER pendant 15 minutes avec une

vitesse d'agitation de 50 tours/minute (ECHANTILLON 7).

Un mélange en poids comportant 49 parties de propylène, 49 parties de polyparavinylphénol et 2 parties du copolymère éthylène-propylène maléisé décrit dans l'exemple 3.A, est malaxé dans les mêmes conditions que ci-dessus (ECHANTILLON 8).

On prépare également dans les mêmes conditions un mélange en poids contenant 49 parties de polypropylène, 49 parties de polyparavinylphénol et 2 parties du copolymère greffé décrit dans l'exemple 3.C (ECHANTILLON 9).

Pour les ECHANTILLONS 7, 8 et 9, le polypropylène utilisé a un melt index égal à 5 et un point de fusion égal à 166 °C et le polyparavinylphénol est un oligomère dont la masse moléculaire moyenne en poids est de 4 000 et dont le point de fusion s'échelonne entre 160 et 200°C.

Les ECHANTILLONS 7, 8 et 9 sont ensuite examinés par microscopie électronique à balayage (grossissement : X 2 500).

L'examen de l'ECHANTILLON 7 indique une morphologie grossière dans laquelle on trouve localisés des phases cocontinues ou des nodules ovoïdes de PPVP de diamètre moyen égal à 30 µm dispersés dans une matrice de PP. L'incompatibilité totale des deux polymères est mise en évidence par l'observation de facies de fracture.

L'examen de l'ECHANTILLON 8 montre une meilleure dispersion du polyparavinylphénol (PPVP) dans le polypropylène. La taille moyenne des nodules de PPVP dispersés dans la matrice de PP est d'environ 10 µm. L'adhésion entre les phases n'est pas améliorée par rapport à l'ECHANTILLON 7.

L'examen de l'ECHANTILLON 9 indique une morphologie fine, caractérisée par des nodules de PPVP de diamètre moyen égal à 2 µm dispersés dans la matrice de PP et dont l'adhésion à cette matrice est fortement améliorée par rapport à celle des ECHANTILLONS 7 et 8.

EXEMPLE 6

Un mélange en poids comportant 50 parties de polypropylène et 50 parties de polyétheresteramide est porté à 200 °C et malaxé dans la cuve d'un plastographe BRABENDER pendant 15 minutes avec une vitesse d'agitation de 50 tours/minute (ECHANTILLON 10).

Un mélange en poids comportant 49 parties de propylène, 49 parties de polyétheresteramide et 2 parties du copolymère éthylène-propylène maléisé décrit dans l'exemple 3.A, est malaxé dans les mêmes conditions que ci-dessus (ECHANTILLON 11).

On prépare également dans les mêmes conditions un mélange en poids contenant 49 parties de polypropylène, 49 parties de polyétheresteramide et 2 parties du copolymère greffé décrit dans l'exemple 3.C (ECHANTILLON 12).

Pour les ECHANTILLONS 10, 11 et 12, le polypropylène utilisé a un melt index égal à 5 et un point de fusion égal à 166 °C et le polyétheresteramide est obtenu par copolycondensation de séquences de polyamide 12 $\alpha$, $\omega$ dicarboxylées de $\overline{Mn} = 600$, et de séquences de polytétraméthylène glycol $\alpha$, $\omega$ dihydroxylées de $\overline{Mn} = 2000$.

Les ECHANTILLONS 10, 11 et 12 sont ensuite examinés par microscopie électronique à balayage (grossissement : X 2 500).

L'examen de l'ECHANTILLON 10 indique une morphologie particulièrement grossière caractérisée par un réseau tridimensionnel.

L'examen de l'ECHANTILLON 11 ne montre ni amélioration de l'adhésion, ni réduction de la taille du réseau tridimensionnel par rapport à l'examen de l'ECHANTILLON 10.

En examinant l'ECHANTILLON 12, on observe une morphologie moins grossière que celle des ECHANTILLONS 10 et 11. La morphologie de l'ECHANTILLON 12 n'est plus caractérisée par un réseau tridimensionnel mais par la dispersion de nodules de polyétheresteramide dans une matrice de polypropylène.

EXEMPLE 7

Un mélange en poids comportant 50 parties de polypropylène et 50 parties de polyamide amorphe semi-aromatique est porté 220°C et malaxé dans la cuve d'un plastographe BRABENDER pendant 30 minutes avec une vitesse d'agitation de 50 tours/minute (ECHANTILLON 13).

Un mélange en poids comportant 49 parties de polypropylène, 49 parties polyamide amorphe semi-aromatique et 2 parties du copolymère éthylène-propylène maléisé décrit dans l'exemple 3.A, est malaxé dans les mêmes conditions que ci-dessus (ECHANTILLON 14).

On prépare également dans les mêmes conditions un mélange en poids contenant 49 parties de polypropylène, 49 parties de polyamide amorphe semi-aromatique et 2 parties du copolymère greffé décrit dans l'exemple 3.C (ECHANTILLON 15).

Pour les ECHANTILLONS 13, 14 et 15 le polypropylène utilisé a un melt index égal à 5 et un point de fusion égal à 166 °C et le polyamide amorphe semi-aromatique utilisé est à base d'acide téréphtalique et de triméthyl (2,2,4 - et 2,4,4 -) diamino - 1,6 hexane.

Les ECHANTILLONS 13, 14 et 15 sont ensuite examinés par microscopie électronique à balayage (grossissement : X 2 500).

L'examen de l'ECHANTILLON 13 indique une incompatibilité entre les 2 polymères : on distingue des nodules de polyamide amorphe semi-aromatique dont le diamètre moyen est de 30 µm, dispersés dans la matrice de polypropylène. De plus, l'adhésion entre les nodules de polyamide amorphe semi-aromatique et la

matrice de PP est inexistante.

L'ECHANTILLON 14 présente une morphologie assez grossière ; des nodules de polyamide amorphe semi-aromatique de diamètre moyen égal à 5 µm, sont dispersés dans la matrice de polypropylène ; l'adhésion des nodules à la matrice est moyenne.

L'examen de l'ECHANTILLON 15 indique une morphologie assez fine caractérisée par des nodules de polyamide amorphe semi-aromatique de diamètre moyen égal à 3,3 µm et dont l'adhésion à la matrice de PP est bonne.

EXEMPLE 8

Un mélange en poids comportant 50 parties de polypropylène et 50 parties de polyamide amorphe semi-aromatique est porté à 280°C et malaxé dans la cuve d'un plastographe HAAKE pendant 20 minutes avec une vitesse d'agitation de 50 tours/minute (ECHANTILLON 16).

Un mélange en poids comportant 49 parties de polypropylène, 49 parties de polyamide amorphe semi-aromatique et 2 parties du copolymère éthylène-propylène maléisé décrit dans l'exemple 3.A, est malaxé dans les mêmes conditions que ci-dessus (ECHANTILLON 17).

On prépare également dans les mêmes conditions un mélange en poids contenant 49 parties de polypropylène, 49 parties de polyamide amorphe semi-aromatique et 2 parties du copolymère greffé décrit dans l'exemple 3.C (ECHANTILLON 18).

Pour les ECHANTILLONS 16, 17 et 18 le polypropylène utilisé a un melt index égal à 5 et un point de fusion égal à 166 °C ; le polyamide amorphe semi-aromatique utilisé est à base d'acide isophtalique, de diamino 4,4' - diméthyl 3,3' - dicyclohexyl méthane et de lauryllactame.

Les ECHANTILLONS 16, 17 et 18 sont ensuite examinés par microscopie électronique à balayage (grossissement : X 2 500).

L'examen de l'ECHANTILLON 16 indique une incompatibilité entre les 2 polymères : on distingue des nodules de polyamide amorphe semi-aromatique dont le diamètre moyen est de 20 µm dispersés dans la matrice de polypropylène. De plus, l'adhésion entre les nodules de polyamide amorphe semi-aromatique et la matrice de PP est inexistante.

L'examen de l'ECHANTILLON 17 présente une morphologie assez grossière : des nodules de polyamide amorphe semi-aromatique de diamètre moyen égal à 10 µm sont dispersés dans la matrice de polypropylène ; l'adhésion des nodules à la matrice est moyenne.

L'examen de l'ECHANTILLON 18 indique une morphologie assez fine caractérisée par des nodules de polyamide amorphe semi-aromatique de diamètre moyen égal à 3,5 µm et dont l'adhésion à la matrice de polypropylène est bonne.

EXEMPLE 9 :

Dans une extrudeuse WERNER, on introduit en continu un mélange en poids comportant 26 parties de polypropylène, 67 parties de polyamide 6 et 7 parties du copolymère éthylène-propylène maléisé décrit dans l'exemple 3-A (ECHANTILLON 19).

Le long du fourreau, la température matière est comprise entre 260°C et 290°C. La vitesse de rotation de la vis est de 150 tours/minute et le débit de la matière est de 20 kg/heure.

On extrude dans les mêmes conditions un mélange en poids contenant 26 parties de polypropylène, 67 parties de polyamide 6 et 7 parties du copolymère greffé décrit dans l'exemple 1.C (ECHANTILLON 20).

On prépare, également dans les mêmes conditions, un mélange témoin contenant (en poids) 32,7 % de polypropylène et 67,3 % de polyamide 6.

Pour les ECHANTILLONS 19, 20 et 21, le polypropylène utilisé est un homopolymère de polypropylène de melt-index 12 et de point de fusion 166°C, le polyamide 6 est un homopolymère de caprolactame de point de fusion 218°C.

On injecte les échantillons 19, 20 et 21 sous forme de barreaux de dimensions 127 X 12,7 X 6,4 mm et on évalue leur résistance au choc IZOD selon la norme ISO à 23°C et à 40°C. Les résultats de cette évaluation figurent dans le tableau ci-dessous.

| ECHANTILLON | RESISTANCE AU CHOC IZOD% | |
|---|---|---|
| | 23°C | 40°C |
| 19 | 6 | 9 |
| 20 | 10,5 | 13 |
| 21 | 2 | 3 |

**Revendications**

1. Copolymère greffé caractérisé en ce qu'il répond à l'expression : $A_a\, M_b\, X_c\, P_d$ dans laquelle :
. $A_a\, M_b$ correspond au (co)polymère-tronc,
. $X_c\, P_d$ correspond aux polymères greffés sur le (co)polymère-tronc,
. A est un motif dérivé d'une α-mono-oléfine contenant de 2 à 8 atomes de carbone, et est de préférence un motif dérivé de propylène,
. M est choisi dans le groupe constitué par :
- les motifs dérivés d'une α-mono-oléfine contenant de 2 à 8 atomes de carbone, et de préférence dérivés d'éthylène,
- les motifs dérivés de plusieurs α-mono-oléfines telles que définies précédemment, qui peuvent être simplement mélangés ensemble ou être copolymérisés de façon statistique ou séquencée, et de préférence dont l'une des α-mono-oléfines est l'éthylène,
- les motifs dérivés d'un monomère pouvant être polymérisés avec une des α-mono-oléfines telles que définies précédemment, par exemple un acrylate d'alkyle,
. les motifs A et M qui constituent ledit (co)polymère-tronc sont copolymérisés de façon statistique ou séquencée ou sont simplement mélangés,
. X est un motif dérivé d'un monomère pouvant être greffé radicalairement sur un homo ou copolymère d'α-mono-oléfine et possédant une fonction pouvant réagir avec un motif amine,
. P dérive d'un oligomère de polyamide de formule :

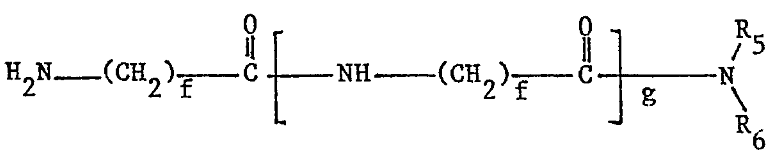

dans laquelle :
. f est un nombre compris entre 3 et 11,
. g est un nombre compris entre 5 et 80 et de préférence compris entre 15 et 55,
. $R_5$ est l'hydrogène ou un groupement alkyle linéaire ou ramifié contenant jusqu'à 20 atomes de carbone,
. $R_6$ est une groupement ayant jusqu'à 20 atomes de carbone alkyle ou alcényle linéaire ou ramifié, un radical cycloaliphatique, saturé ou non, un radical aromatique ou une combinaison des précédents,
. a, b, c et d sont des nombres répondant aux définitions suivantes :
. a est compris entre 0 et 5000 et de préférence entre 350 et 2000,
. la somme a + b est comprise entre 350 et 45.000 et de préférence entre 500 et 10 000,
. c est choisi de telle sorte que le rapport pondéral du monomère X greffé sur le (co)polymère-tronc au copolymère greffé avec X soit compris entre 500 ppm et 10 %, et de préférence entre 5 000 ppm et 2 %,
. d est non nul et inférieur ou égal à c, et de préférence, au moins égal à 0,3 c.

2. Copolymère greffé selon la revendication 1, caractérisé en ce que le monomère dont dérive X est choisi parmi les produits de formule :

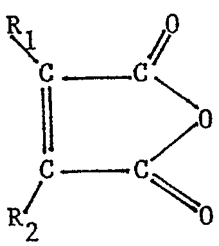 , 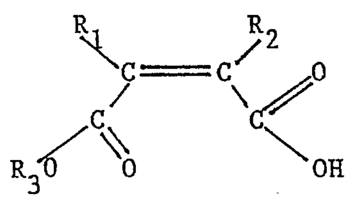 , 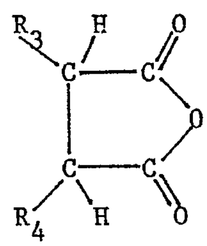

dans lesquelles :
. $R_1$ et $R_2$ sont soit l'hydrogène, soit une chaîne alkyle linéaire ou ramifiée contenant jusqu'à 8 atomes de carbone, l'un au moins de ces symboles représentant l'hydrogène,
. $R_3$ est l'hydrogène ou un groupement alkyle linéaire ou ramifié contenant jusqu'à 10 atomes de carbone,
. $R_4$ est un groupement alcényle linéaire ou ramifié contenant jusqu'à 12 atomes de carbone.

3. Procédé de fabrication du copolymère greffé selon l'une des revendications 1 à 2, caractérisé en ce qu'il comprend :
- un greffage radicalaire sur le (co)polymère-tronc d'un monomère pouvant réagir avec une fonction amine ,
- puis une addition d'un oligomère de polyamide sur le copolymère préalablement greffé.

4. Procédé de fabrication selon la revendication 3, caractérisé en ce que le monomère pouvant réagir avec une fonction amine est choisi parmi l'anhydride citraconique, l'acide fumarique, l'acide

mésaconique, l'anhydride de l'acide 3 - allylsuccinique et, de préférence, l'anhydride maléique.

5. Procédé de fabrication selon les revendications 3 et 4, caractérisé en ce que l'oligomère de polyamide de formule :

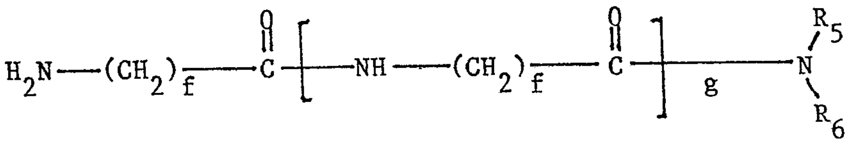

dans laquelle f,g, $R_5$ et $R_6$ sont tels que définis précédemment, est obtenu par polycondensation d'un amino-acide de formule :

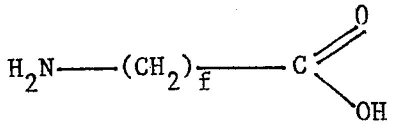

ou par polyaddition d'un lactame de formule

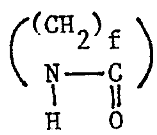

avec f tel que défini ci-dessus en présence d'un limitateur monofonctionnel de polymérisation de formule :

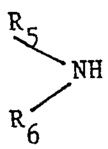

dans laquelle $R_5$ et $R_6$ sont tels que définis précédemment.

6. Procédé selon la revendication 5, caractérisé en ce que le monomère pour la synthèse de l'oligomère de polyamide est choisi parmi le caprolactame, l'acide amino-11-undécanoïque ou le dodécalactame.

7. Procédé selon l'une quelconque des revendications 5 et 6 caractérisé en ce que le limitateur monofonctionnel de polymérisation est soit la laurylamine, soit l'oléylamine.

8. Alliage d'au moins deux polymères thermoplastiques incompatibles rendus compatibles par addition du composé des revendications 1 ou 2.

9. Alliage selon la revendication 8, caractérisé en ce qu'il comprend le copolymère greffé selon l'une quelconque des revendications 1 ou 2 et l'un des couples suivants de polymères thermoplastiques : (co)polyamide aliphatique - (co)polymère de propylène et/ou d'éthylène, (co)polyamide semi-aromatique-(co)polymère de propylène et/ou d'éthylène, polyéther bloc amide-(co)polymère de propylène et/ou d'éthylène, polymère vinylphénolique-(co)polymère de propylène et/ou d'éthylène, copolymère (éthylène-acétate de vinyle) hydrolysé-(co)polymère de propylène et/ou d'éthylène.

10. Alliage selon la revendication 9 choisi dans le couple :

| | |
|---|---|
| Polyamide-6 | - polypropylène |
| Polyamide-6 | - polyéthylène |
| Polyamide-6 | copolymère éthylène/propylène |
| Polyamide-11 ou 12 | - polypropylène ou polyéthylène ou copolymère éthylène/propylène |
| Copolymère éthylène - acétate de vinyle hydrolysé | - polypropylène ou polyéthylène ou copolymère éthylène/propylène |
| Polyéther bloc amide | - polypropylène ou polyéthylène ou copolymère éthylène/propylène |
| Poltparavinylphénol | - polypropylène ou polyéthylène ou copolymère éthylène/propylène |
| Polyamide semi-aromatique | - polypropylène ou polyéthylène ou copolymère éthylène/propylène |

11. Alliage selon l'une quelconque des revendications 8 à 10 caractérisé en ce qu'il contient de 0,1 à 30 % en poids du copolymère greffé tel que défini dans les revendications 1 ou 2, et de préférence de 5 à 15 %, par rapport au poids du mélange de résines thermoplastiques.

Office européen des brevets

# RAPPORT DE RECHERCHE EUROPEENNE

Numero de la demande

EP 89 40 0658

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 291 225 (E.I. DU PONT DE NEMOURS AND CO.)<br>* page 7, ligne 1 - page 10, ligne 2; page 12, ligne 15 - page 13, ligne 1 * | 1-7 | C 08 G 81/02<br>C 08 L 77/00<br>C 08 L 23/12<br>C 08 L 25/18<br>C 08 L 31/04 |
| A | PATENT ABSTRACTS OF JAPAN vol. 10, no. 103 (C-340)(2160) 18 avril 1986; & JP - A - 60 233131 (TOA GOSEI KAGAKU KOGYO K.K.) 19.11.1985 | 1 | |
| A | FR-A-2 200 321 (BASF AG)<br>* revendication 1; page 1, ligne 13 - page 2, ligne 39 * | 1,8-11 | |
| A | EP-A-0 157 984 (PLASTIC SPECIALTIES AND TECHNOLOGIES INC.)<br>* revendications 1,10,11; page 2, lignes 1-11 * | 1-5 | |
| A | FR-A-2 291 252 (E. I. DU PONT DE NEMOURS AND COMPANY)<br>* revendications 1,3-8,10; page 3, ligne 4; page 6, ligne 31 * | 1-11 | **DOMAINES TECHNIQUES RECHERCHES (Int. Cl.4)** |
| A | PATENT ABSTRACTS OF JAPAN vol. 9, no. 59 (C-270)(1782) 15 mars 1985; & JP - A - 59 197459 (UBE KOSAN K.K.) 09.11.1984 | 1 | C 08 G 81/02<br>C 08 L 23/12<br>C 08 L 25/18<br>C 08 L 31/04<br>C 08 L 77/00 |
| D,A | FR-A-2 107 538 (MITSUBISHI RAYON CO. LTD.)<br>* revendications 1-5; page 2, lignes 5-16 * | 1,8-11 | |
| A | EP-A-0 193 720 (HUELS AG)<br>* revendication 1 *<br>-/- | 8,9 | |

Le présent rapport a été établi pour toutes les revendications

| Lieu de la recherche | Date d'achèvement de la recherche | Examinateur |
|---|---|---|
| BERLIN | 02-08-1989 | IDEZ C.G. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

Office européen des brevets

# RAPPORT DE RECHERCHE EUROPEENNE

Numero de la demande

EP 89 40 0658

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | PATENT ABSTRACTS OF JAPAN vol. 1, no. 84 (C-77)(1764) 6 aout 1977; & JP - A - 52 47052 (MITSUBISHI KASEI KOGYO K.K.) 14.04.1977 --- | 8-10 | |
| A | PATENT ABSTRACTS OF JAPAN vol. 1, no. 131 (C-77)(3009) 28 octobre 1977; & JP - A - 52 85242 (MITSUI SEKIYU KAGAKU KOGYO K.K.) 15.07.1977 --- | 8-11 | |
| A | PATENT ABSTRACTS OF JAPAN vol. 7, no. 232 (C-190)(1377) 14 octobre 1983; & JP - A - 58 122950 (IDEMITSU KOSAN K.K.) 21.07.1983 --- | 8-11 | |
| A | GB-A-2 002 784 (MARUZEN OIL CO. LTD.) * revendication 1 * ----- | 8-10 | |
| | | | DOMAINES TECHNIQUES RECHERCHES (Int. Cl.4) |

Le présent rapport a été établi pour toutes les revendications

| Lieu de la recherche | Date d'achèvement de la recherche | Examinateur |
|---|---|---|
| BERLIN | 02-08-1989 | IDEZ C.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)